# FASCICULE DE BREVET EUROPEEN

(11) **EP 1 149 448 B1**
(45) Date de publication et mention de la délivrance du brevet: **20.07.2005**
(21) Numéro de dépôt: 99956147.5
(22) Date de dépôt: 25.11.1999
(51) Int. Cl.: H02G 3/12, H02B 1/052

(54) **ACCESSOIRE DE FIXATION POUR MECANISME D'APPAREILLAGE A ASSUJETTIR AU SOCLE D'UNE GOULOTTE**
EINBAUGERÄT-BEFESTIGUNGSVORRICHTUNG FÜR KABELKANALSOCKEL
ACCESSORY FOR FIXING AN APPARATUS MECHANISM TO BE MOUNTED ON THE BASE OF A WIREWAY

(30) Priorité: 27.11.1998 FR 9814944
(43) Date de publication de la demande: 31.10.2001
(73) Titulaire: LEGRAND, 87000 Limoges (FR); LEGRAND SNC, 87000 Limoges (FR)
(72) Inventeur: RAYON, Jacky, F-53600 Voutre (FR)
(74) Mandataire: Santarelli
(86) Numéro de dépôt international: PCT/FR1999/002914
(87) Numéro de publication internationale: WO 2000/033437

(56) Documents cités:
- DE-A- 19 527 133
- FR-A- 2 734 422
- US-A- 5 174 788

## Description

La présente invention concerne d'une manière générale les goulottes du type de celles mises en oeuvre pour le support, le logement et la protection de divers appareillages, et, en particulier, de divers appareillages électriques, aussi bien que pour le support, le logement et la protection des conducteurs ou autres canalisations nécessaires à la desserte de ces appareillages.

Ainsi qu'on le sait, ces goulottes comportent, globalement, d'une part, un socle, dont la section transversale est ouverte, et, d'autre part, un couvercle, qui, pour la fermeture de l'ensemble, est adapté à être rapporté sur le socle.

La présente invention vise plus particulièrement l'assujettissement d'un appareillage, ou, plus précisément, du mécanisme de celui-ci, au socle d'une telle goulotte.

Elle vise plus particulièrement, encore, le cas où cet assujettissement se fait par l'intermédiaire d'un accessoire de fixation, qui, d'une part, est adapté à pouvoir être solidarisé au mécanisme d'appareillage concerné, et qui, d'autre part, est conjointement adapté à pouvoir être solidarisé au socle de la goulotte.

Le plus souvent, le socle d'une goulotte présente, en saillie sur sa surface interne, pour permettre un tel assujettissement, une ou plusieurs nervures, qui courent longitudinalement sur toute sa longueur, à la manière de rails, et qui, par exemple, présentent, transversalement, au moins un retour propre à l'encliquetage d'un tel accessoire de fixation.

Le plus souvent, également, et cela est par exemple le cas dans le brevet français qui, déposé le 6 mai 1977, sous le No 77 13834, a été publié sous le No 2 390 073, cet accessoire de fixation, ou, plus exactement, chacun des piétements qui le constitue, est d'un seul tenant.

Cette disposition a donné, et peut encore donner satisfaction.

Elle présente cependant l'inconvénient de nécessiter une multiplication des fabrications.

En effet, les goulottes présentes sur le marché ont des configurations très diverses.

En particulier, suivant les fabrications, les nervures présentes en saillie sur le fond de leur socle peuvent différer d'une goulotte à une autre par une ou plusieurs caractéristiques telles que hauteur, espacement, largeur du retour et forme du retour.

En outre, ce socle peut également avoir, d'une goulotte à une autre, une hauteur différente, alors que les mécanismes d'appareillage à fixer doivent dans tous les cas sensiblement affleurer avec leur débouché.

Ainsi, il faut à chaque fois, goulotte par goulotte, un accessoire de fixation convenant à la configuration particulière d'une telle goulotte.

Il a été cependant déjà proposé des dispositions permettant de se satisfaire de goulottes différentes.

Par exemple, dans le brevet français qui, déposé le 30 août 1990, sous le No 90 10809, a été publié sous le No 2 666 481, et il a été proposé de mettre en oeuvre, à titre d'accessoire de fixation, une embase réversible.

Mais un tel accessoire de fixation ne peut convenir qu'à un nombre très limité de goulottes différentes, en l'espèce deux.

Il a également été proposé de fractionner l'accessoire de fixation en deux pièces distinctes, à savoir, une pièce supérieure, qui est adaptée à pouvoir être solidarisée à un mécanisme d'appareillage, et une pièce inférieure, qui est adaptée à pouvoir être solidarisée au socle d'une goulotte, avec, intervenant entre ces deux pièces, des moyens de solidarisation.

Cela est le cas, par exemple, dans le brevet français qui, déposé le 21 décembre 1990, sous le No 90 16075, a été publié sous le No 2 670 845.

Mais, en l'espèce, eu égard à la nature même des moyens de solidarisation mis en oeuvre, en pratique des moyens de crémaillère, seul un réglage en hauteur est possible.

En outre, avec de tels moyens de solidarisation, la tenue mécanique des deux pièces l'une par rapport à l'autre est relativement incertaine, au détriment de la stabilité de l'ensemble.

Il est également connu du document US 5 174 788 un porte-fusible et un adaptateur pour le montage du porte-fusible sur un rail, qui sont aptes à être solidarisés l'un à l'autre par des moyens de montage à quart de tour.

L'adaptateur présente, sur sa surface interne, plusieurs rainures d'encliquetage pour permettre son montage en saillie sur différents rails.

Toutefois, un tel adaptateur est complexe, ce qui le rend coûteux.

La présente invention a d'une manière générale pour objet une disposition permettant au contraire, et au moindre prix, une adaptation souple et sûre à la quasi totalité de la gamme de goulottes présentes sur le marché, sinon la totalité de celle-ci.

De manière plus précise, elle a pour objet un accessoire de fixation selon la revendication 1.

Grâce aux moyens de solidarisation du type à quart de tour, les deux pièces constitutives de l'accessoire de fixation suivant l'invention peuvent très rapidement, et très aisément, être assujetties l'une à l'autre, et la tenue mécanique de l'ensemble alors ainsi constitué est particulièrement ferme et sûre.

Corollairement, pour l'application d'un tel accessoire de fixation à des goulottes de configurations différentes, il suffit de décliner en conséquence la seule pièce inférieure de celui-ci, sa pièce supérieure, elle, au contraire, étant toujours la même.

Certes, il en résulte, là aussi, une multiplication des fabrications.

Mais, suivant l'invention, celle-ci est avantageusement limitée à une fraction de la hauteur de l'accessoire de fixation, en l'espèce celle de sa seule pièce inférieure.

La quantité de matière nécessaire à la fabrication de l'ensemble des accessoires de fixation de types différents souhaité est ainsi avantageusement moindre, au bénéfice des coûts.

En outre, les deux pièces dans lesquelles est ainsi dissocié l'accessoire de fixation suivant l'invention sont avantageusement simples.

Leur moulage peut ainsi avantageusement se faire avec des moules également simples, ne nécessitant pas de mouvements particuliers lors du moulage, et susceptibles de ce fait de cadences de moulage relativement élevées.

Ainsi, malgré la multiplication des fabrications en ce qui concerne sa pièce inférieure, l'accessoire de fixation suivant l'invention reste avantageusement relativement économique à réaliser.

En outre, son adaptation éventuelle à d'autres configurations de goulotte peut également se faire de manière relativement économique et rapide, puisqu'elle ne concerne alors que sa seule pièce inférieure.

En bref, suivant l'invention, à une même pièce supérieure peut avantageusement être associé tout un jeu de pièces inférieures différentes, et celui-ci peut être modifié et/ou accru au gré des nécessités.

Les caractéristiques et avantages de l'invention ressortiront d'ailleurs de la description qui va suivre, à titre d'exemple, en référence aux dessins schématiques annexés sur lesquels :
la figure 1 est une vue en perspective d'un accessoire de fixation suivant l'invention et d'un mécanisme d'appareillage à la fixation duquel il participe ;
la figure 2 est une vue en perspective éclatée de l'ensemble ;
la figure 3 est, à échelle supérieure, et suivant la flèche III de la figure 2, une vue partielle en plan de l'une des pièces constitutives de l'accessoire de fixation suivant l'invention, en l'espèce sa pièce supérieure ;
la figure 4 est une vue partielle en coupe transversale de cette pièce supérieure, suivant la ligne IV-IV de la figure 3 ;
les figures 5A et 5B sont, à échelle différente, des vues en perspective illustrant deux phases successives du montage de l'accessoire de fixation suivant l'invention ;
les figures 6, 7, 8, 9 et 10 sont des vues en perspective illustrant à titre d'exemples diverses formes de réalisation différentes pour la pièce inférieure de cet accessoire de fixation.

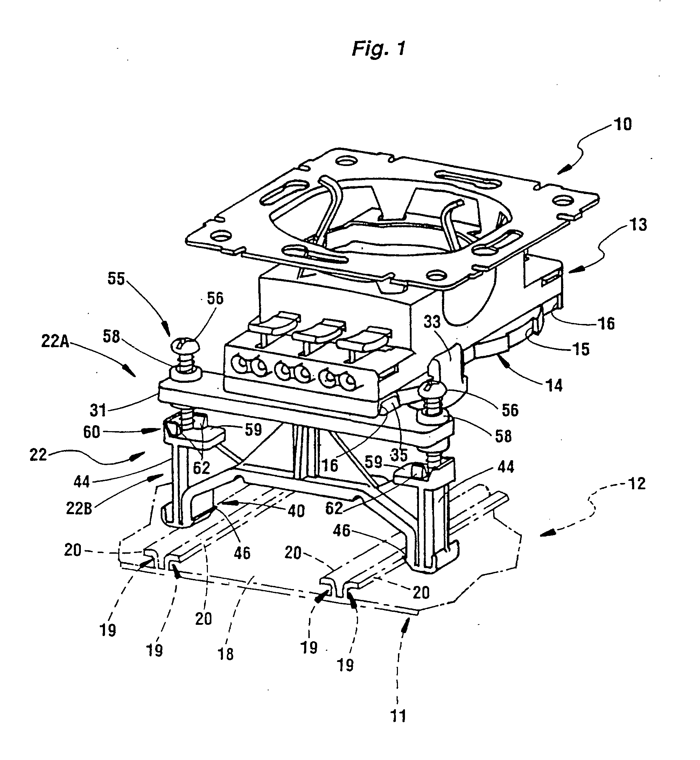

Tel qu'illustré sur la figure 1, il s'agit, globalement, d'assurer l'assujettissement d'un quelconque mécanisme d'appareillage 10 au socle 11 d'une quelconque goulotte 12.

Le mécanisme d'appareillage 10 ne relevant pas par lui-même de la présente invention, il ne sera pas décrit dans tous ses détails ici.

Il suffira d'indiquer que, dans la forme de réalisation représentée, ce mécanisme d'appareillage 10 comporte un corps 13 dont le contour, en plan, est globalement rectangulaire, et que, à sa base, ce corps 13 comporte, sur chacun de deux côtés opposes, qui en sont en pratique les côtés longitudinaux, d'une part, en saillie à distance l'un de l'autre, deux bossages arrondis 14 présentant, chacun, dans leur zone médiane, une encoche 15, et, d'autre part, en creux à distance l'un de l'autre, deux dégagements 16, qui, en pratique, encadrent les bossages arrondis 14.

Par exemple, et tel que représenté, il s'agit d'un mécanisme d'appareillage électrique, et, plus précisément, du mécanisme d'un socle de prise de courant.

Le socle 11 de la goulotte 12 auquel doit être assujetti un tel mécanisme d'appareillage 10 ne relève pas non plus de la présente invention, il ne sera donc pas non plus décrit en détail ici.

Il n'a d'ailleurs été que partiellement schématisé, en traits interrompus, sur la figure 1.

Il suffira, donc, d'indiquer, que, dans la forme de réalisation représentée, ce socle 11 comporte, en saillie sur la surface interne de son fond 18, deux paires de nervures 19, qui courent longitudinalement sur toute sa longueur, à distance l'une de l'autre, et parallèlement l'une à l'autre, et que les nervures 19 de chacune de ces paires de nervures 19 comportent, chacune, dos à dos, et parallèlement au fond 18, un retour 20.

De manière connue en soi, l'assujettissement du mécanisme d'appareillage 10 au socle 11 de la goulotte 12 se fait à la faveur de ces nervures 19, et, plus précisément, à la faveur de leur retour 20.

De manière connue en soi, enfin, cet assujettissement se fait par l'intermédiaire d'au moins un accessoire de fixation 22.

En pratique, pour un même mécanisme d'appareillage 10, deux accessoires de fixation 22 sont prévus, à distance l'un de l'autre, et parallèlement l'un à l'autre, à raison d'un pour chacun des bossages arrondis 14 de l'un ou l'autre des côtés longitudinaux du corps 13 de ce mécanisme d'appareillage 10.

Ces accessoires de fixation 22, qui sont identiques l'un à l'autre, interviennent transversalement par rapport aux nervures 19 du socle 11 de la goulotte 12, en s'étendant de l'une à l'autre des deux paires de nervures 19 de celui-ci.

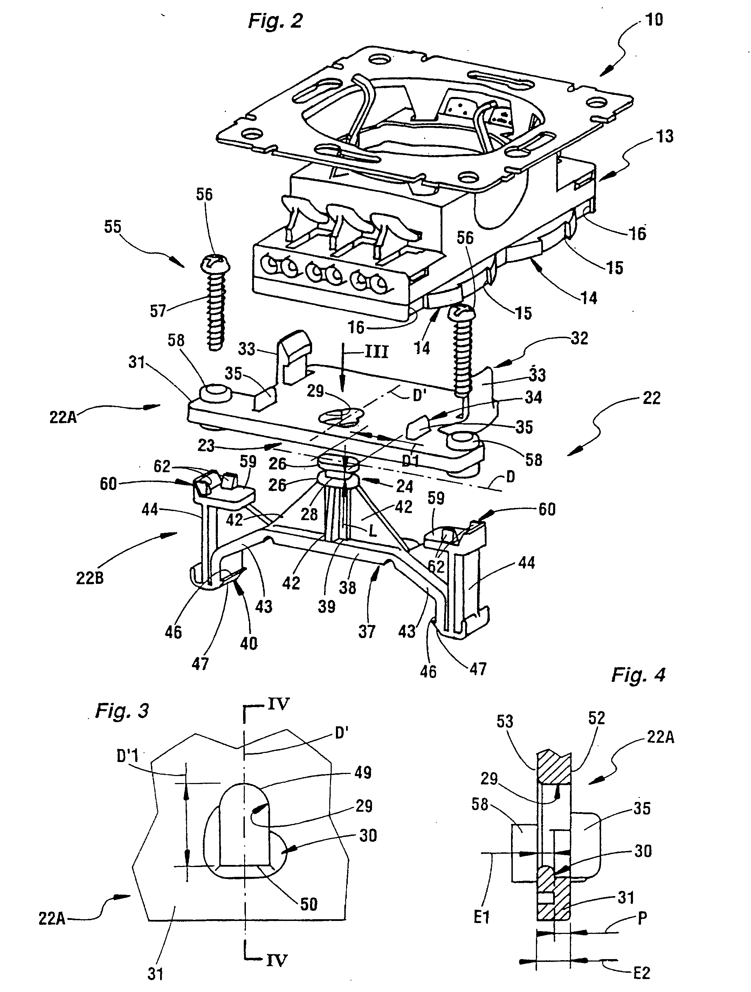

De manière connue en soi, enfin, et ainsi qu'il est mieux visible sur la figure 2, l'accessoire de fixation 22 suivant l'invention est formé de deux pièces 22A, 22B distinctes, à savoir, une pièce supérieure 22A, qui, suivant des modalités décrites plus en détail ultérieurement, est adaptée à pouvoir être solidarisée au mécanisme d'appareillage 10, et une pièce inférieure 22B, qui, suivant des modalités également décrites plus en détail ultérieurement, est adaptée à pouvoir être solidarisée au socle 11 de la goulotte 12, avec, intervenant entre ces deux pièces 22A, 22B, des moyens de solidarisation 23.

Suivant l'invention, ces moyens de solidarisation 23 sont des moyens de montage du type montage à quart de tour.

Dans la forme de réalisation représentée, ces moyens de solidarisation 23 comportent, d'une part, sur l'une des pièces 22A, 22B, une tête 24, dont le contour transversal est globalement allongé, suivant une direction d'allongement D, et qui présente, annulairement, entre deux joues 26 parallèles, l'une supérieure, l'autre inférieure, une rainure 28.

Corollairement, les moyens de solidarisation 23 comportent, sur l'autre des pièces 22A, 22B, un évidement 29, dont le contour transversal, lui aussi allongé suivant une direction d'allongement D', est apte au passage de la tête 24 précédente, et qui, en croix avec sa direction d'allongement D', est bordé, latéralement, sur au moins deux côtés opposés, et ainsi qu'il est mieux visible sur la figure 3, par une banquette 30 dont l'épaisseur E1 est au plus égale à la largeur L de la rainure 28 de cette tête 24.

Par exemple, et tel que représenté, la tête 24 appartient à la pièce 22B inférieure, et l'évidement 29 à la pièce 22A supérieure.

Dans les formes de réalisation représentées, la pièce 22A supérieure se réduit, pour l'essentiel, à une platine 31, dont l'épaisseur E2 est supérieure à la largeur L de la rainure 28 de la tête 24 de l'autre pièce, c'est-à-dire de la pièce 22B inférieure, et l'évidement 29 intervient sur cette platine 31, en traversant celle-ci de part en part.

En pratique, la pièce 22A supérieure comporte, en saillie sur sa face supérieure, et, plus précisément, sur la face supérieure de sa platine 31, des moyens d'encliquetage 32 par lesquels elle est adaptée à pouvoir être rapportée sur le mécanisme d'appareillage 10.

Par exemple, et tel que représenté, ces moyens d'encliquetage 32 comportent deux pattes élastiquement déformables 33, qui sont chacune conformées en crochet, et qui sont ainsi adaptées à pouvoir venir chacune s'encliqueter sur un bossage arrondi 14 du corps 13 du mécanisme d'appareillage 10, à la faveur de l'encoche 15 que présente ce bossage arrondi 14, l'une sur l'un des côtés longitudinaux de ce corps 13, l'autre sur l'autre de ces côtés longitudinaux.

Dans les formes de réalisation représentées, la pièce 22A supérieure comporte, également, en saillie sur sa face supérieure, et, plus précisément, en saillie sur la face supérieure de la platine 31, des moyens d'emboîtement 34 par lesquels elle est adaptée à pouvoir être engagée sur le mécanisme d'appareillage 10.

Par exemple, et tel que représenté, ces moyens d'emboîtement 34 comportent deux nervures 35, qui s'étendent longitudinalement, et par lesquelles cette pièce 22A supérieure est propre à venir s'engager sur le corps 13 du mécanisme d'appareillage 10 à la faveur de deux dégagements 16 opposés de celui-ci, l'un sur l'un des côtés longitudinaux de ce corps 13, l'autre sur l'autre de ces côtés longitudinaux.

Dans les formes de réalisation représentées, la pièce 22B inférieure comporte, globalement, une traverse 37, avec, en saillie sur la face supérieure de cette traverse 37, dans la partie médiane 38 de celle-ci, un tronc 39, qui porte la tête 24, et, en saillie sur sa face inférieure, des moyens d'encliquetage 40, par lesquels elle est adaptée à pouvoir être rapportée sur le socle 11 de la goulotte 12, à la faveur des nervures 19 de celui-ci.

En pratique, dans les formes de réalisation représentées, la tête 24 intervient en bout du tronc 39, et celui-ci est relié à la traverse 37 par des nervures de raidissement 42.

Dans la forme de réalisation plus particulièrement représentée sur les figures 1 à 5, quatre nervures de raidissement 42 sont prévues en croix.

En outre, dans cette forme de réalisation, la partie médiane 38 de la traverse 37 est en surélévation par rapport à ses extrémités 43, suivant un profil qui, en élévation, est globalement en trapèze, et en bout de ses extrémités 43, interviennent, parallèlement au tronc 39, sur le flanc externe de ces extrémités 43, des jambages 44.

Enfin, dans cette forme de réalisation, les moyens d'encliquetage 40 résultent d'une conformation en crochet des extrémités 43 de la traverse 37, celles-ci présentant chacune, en direction l'une de l'autre, sur leur flanc interne, un cran d'encliquetage 46, qui est précédé d'un chanfrein d'engagement 47, et par lequel elles sont adaptées à venir en prise avec le retour 20 des nervures 19 du socle 11 de la goulotte 12 les plus éloignées l'une de l'autre.

Dans les formes de réalisation représentées, l'évidement 29 des moyens de solidarisation 23 a, suivant sa direction d'allongement D', une dimension longitudinale D'1 supérieure à la dimension longitudinale D1 correspondante de la tête 24, et la banquette 30 le contourne en continu sur trois côtés adjacents deux à deux.

En pratique, dans ces formes de réalisation, la banquette 30 a, en plan, un contour extérieur, qui, sur une partie au moins de sa longueur, est complémentaire de celui de la tête 24.

Plus précisément, le contour extérieur de cette banquette 30 est, dans ces formes de réalisation, complémentaire de celui de la tête 24 sur deux côtés adjacents de l'évidement 29, et, sur le troisième côté, la banquette 30 s'étend au-delà de ce contour.

Autrement dit, parallèlement à la direction d'allongement D' de l'évidement 29, la banquette 30 s'étend sur une plus grande longueur le long d'un des côtés de cet évidement 29 que de l'autre des côtés de celui-ci.

Dans les formes de réalisation représentées, l'évidement 29 a, en plan, un contour qui, à l'une de ses extrémités 49 suivant sa direction d'allongement D', est hémicirculaire, et qui, à l'autre de ses extrémités 50, est quadrangulaire, et la tête 24 a, elle-même, en plan, un contour qui, suivant sa propre direction d'allongement D, est hémicirculaire à chacune de ses propres extrémités, suivant un rayon sensiblement égal à celui de l'extrémité 49 hémicirculaire de l'évidement 29.

Lorsque, comme en l'espèce, l'évidement 29 intervient sur une platine 31 qui appartient à la pièce 22A considérée, et dont l'épaisseur E2 est supérieure à la largeur L de la rainure 28 de la tête 24 de l'autre pièce 22B, la banquette 30 est en retrait par rapport à l'une au moins des faces de cette platine 31.

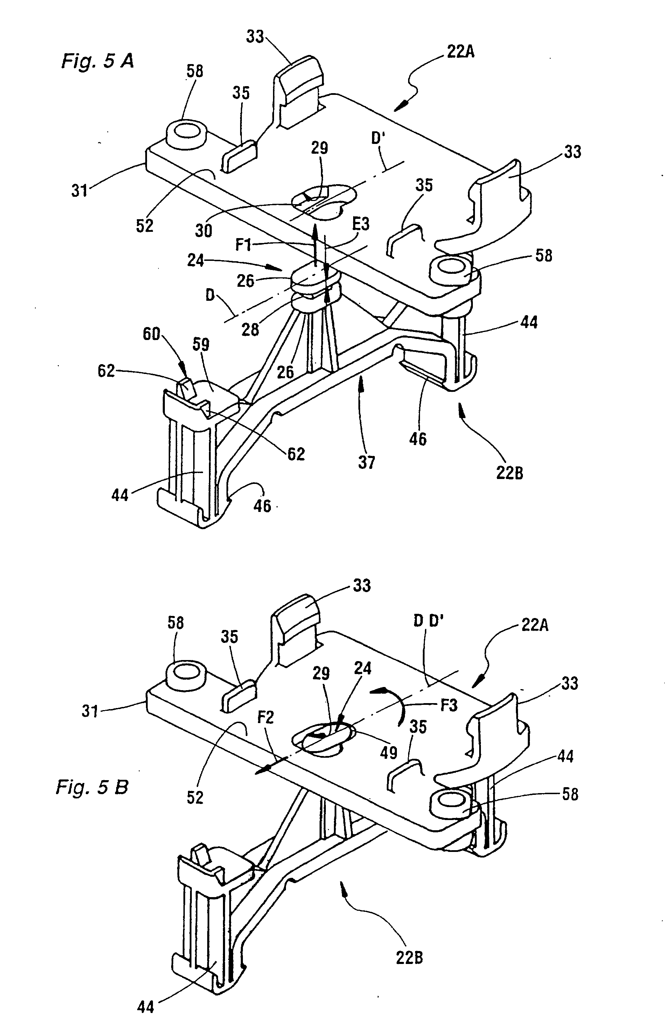

Par exemple, et tel que représentée, cette banquette 30 est en retrait par rapport à la face concernée de la platine 31, en l'espèce sa face supérieure 52, d'une profondeur P sensiblement égale à l'épaisseur E3 de la joue 26 supérieure, et, donc, terminale, de la tête 24, figure 5A, de manière à ce que celle-ci ne fasse pas saillie sur cette face supérieure 52 de la platine 31.

Corollairement, dans les formes de réalisation représentées, la banquette 30 est à niveau avec l'autre face de la platine 31, et, donc, en l'espèce, avec la face inférieure 53 de celle-ci.

Préférentiellement, entre les deux pièces 22A, 22B constitutives d'un accessoire de fixation 22 suivant l'invention interviennent, enfin, des moyens d'arc-boutement 55.

Dans les formes de réalisation représentées, ces moyens d'arc-boutement 55 comportent deux vis 56, qui interviennent à distance l'une de l'autre, et dont chacune est en prise par son fût 57 avec l'une des pièces 22A, 22B et porte sur l'autre de celles-ci par l'extrémité de ce fût 57.

Par exemple, et tel que représenté, les vis 56 sont en prise par leur fût 57 avec la pièce 22A supérieure, celle-ci comportant, à distance l'une de l'autre, sur sa platine 31, transversalement par rapport à cette platine 31, deux cheminées de vissage 58.

Corollairement, la pièce 22B inférieure comporte, en bout de ses jambages 44, deux consoles 59 sur lesquelles les vis 56 peuvent venir porter par l'extrémité de leur fût 57.

Pour chacune des vis 56, la pièce 22A, 22B sur laquelle une telle vis 56 porte par l'extrémité de son fût 57, et, donc, en l'espèce, la pièce 22B inférieure, comporte des moyens de centrage 60.

Par exemple, et tel que représenté, ces moyens de centrage 60 sont constitués par deux ergots 62, qui font saillie sur la console 59 correspondante, et qui, en regard l'un de l'autre, présentent des pans inclinés formant globalement un convergent entre eux.

Au montage, les pièces 22A, 22B sont d'abord amenées à être en prise l'une avec l'autre.

Pour ce faire, il peut, par exemple, être procédé comme suit.

Dans un premier temps, et tel que représenté sur la figure 5A, la pièce 22B inférieure est d'abord présentée en dessous de la pièce 22A supérieure, en croix avec celle-ci.

Puis, suivant la flèche F1 de cette figure 5A, elle est engagée, par sa tête 24, dans l'évidement 29 de la pièce 22A supérieure, jusqu'à ce que la rainure 28 de sa tête 24 se trouve à niveau avec la banquette 30 de cette dernière.

En pratique, la pièce 22B inférieure est alors en butée contre la pièce 22A supérieure, sa joue 26 inférieure ayant par exemple un contour supérieur à celui de l'évidement 29 de cette dernière.

Tel que schématisé par la flèche F2 sur la figure 5B, la pièce 22B inférieure est ensuite déplacée en translation, parallèlement à elle-même, par rapport à la pièce 22A supérieure, suivant la direction d'allongement D de sa tête 24, alors confondue avec la direction d'allongement D' de l'évidement 29 de cette pièce 22A supérieure, jusqu'à ce que sa tête 24 se dégage de l'extrémité 49 hémicirculaire de cet évidement 29.

Enfin, et tel que schématisé par la flèche F3 sur la figure 5B, la pièce 22B inférieure est pivotée de 90° par rapport à la pièce 22A supérieure, ce qui la , conduit à s'emboîter par la rainure 28 de sa tête 24 sur la banquette 30 bordant l'évidement 29 de cette pièce supérieure 22A sur trois côtés adjacents de celui-ci.

Ainsi qu'il est aisé de le comprendre, ce pivotement se fait du côté où la banquette 30 est la plus longue, la surlongueur de cette banquette 30 de ce côté étant précisément prévue pour permettre ce pivotement.

Les vis 56 des moyens d'arc-boutement 55 sont alors mises en place, mais sans serrage, ce qui conforte l'assemblage des pièces 22A, 22B, en évitant toute désolidarisation intempestive ultérieure de celles-ci.

Il suffit, ensuite, de rapporter l'accessoire de fixation 22 ainsi constitué sur le mécanisme d'appareillage 10, puis de l'assujettir au socle 11 de la goulotte 12.

Les vis 56 peuvent alors être serrées, pour confirmer l'encliquetage de l'accessoire de fixation 22 sur les nervures 19 de la goulotte 12.

En variante du processus de montage précédent, la pièce 22B inférieure peut si désiré être d'abord engagée de biais sur la pièce 22A supérieure avant d'être redressée et pivotée.

Suivant l'invention, à une même pièce 22A supérieure, est associé un jeu de pièces 22B inférieures différentes.

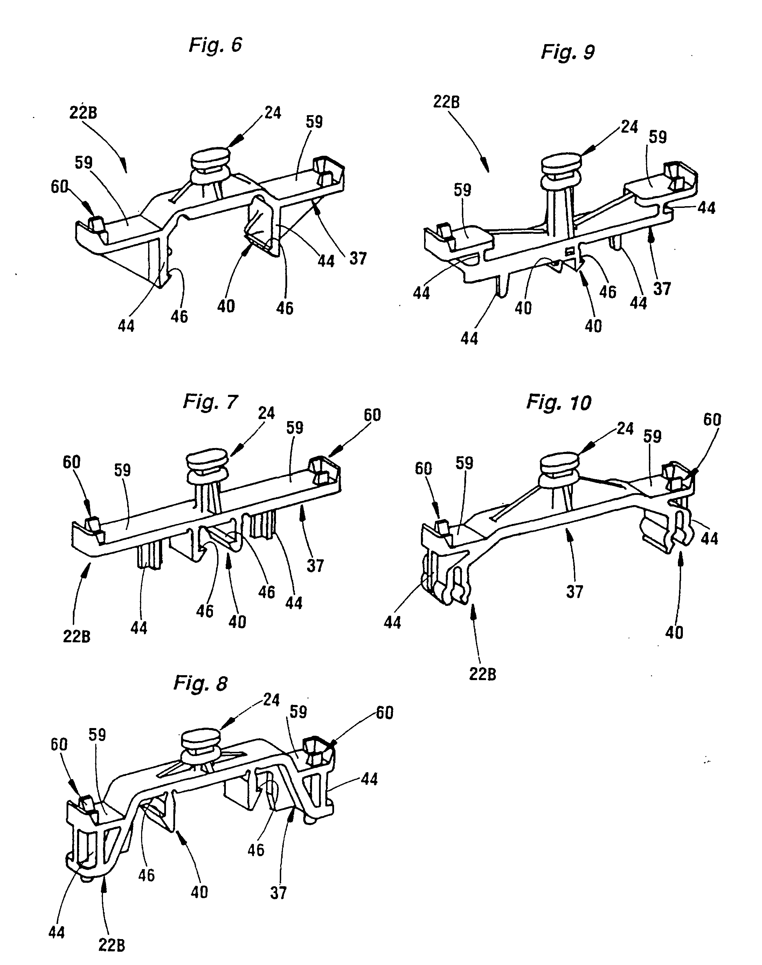

Les figures 6 à 10 donnent, chacune respectivement, à titre d'exemples, en sus des figures 1 à 5, plusieurs configurations différentes possibles pour une telle pièce 22B inférieure.

La diversité même de ces configurations illustre le champ d'application possible pour l'invention.

Ces configurations dépendant des caractéristiques du socle de la goulotte à équiper, et relevant en pratique de l'homme de l'art, elles ne seront pas décrites plus en détail ici.

Il suffira d'indiquer que, si, pour certaines d'entre elles, la traverse 37 de la pièce 22B inférieure en cause a, globalement, en élévation, un profil en trapèze, cette traverse 37 est rectiligne, ou quasi rectiligne, pour d'autres de celles-ci, en formant alors éventuellement par elle-même les consoles 59 propres à l'appui des vis 56, et que, sur les figures, et à toutes fins utiles, les mêmes références ont été désignées pour les éléments ayant les mêmes fonctions.

Bien entendu, la présente invention ne se limite pas aux formes de réalisation et de mise en oeuvre décrites et/ou représentées, mais englobe au contraire toute variante d'exécution et/ou de combinaison de celles-ci.

## Revendications

1. Accessoire de fixation pour mécanisme d'appareillage à assujettir au socle (11) d'une goulotte (12), du genre formé de deux pièces (22A, 22B) distinctes, à savoir, une pièce (22A) supérieure, qui est adaptée à pouvoir être solidarisée à un mécanisme d'appareillage (10), et une pièce (22B) inférieure, qui est adaptée à pouvoir être solidarisée au socle (11) d'une goulotte (12), avec, intervenant entre ces deux pièces (22A, 22B), des moyens de solidarisation (23) du type montage à quart de tour, **caractérisé en ce que** la pièce (22B) inférieure est prise parmi un jeu de pièces (22B) inférieures différentes adaptées à des configurations différentes de socles de goulotte.

2. Accessoire de fixation suivant la revendication 1, **caractérisé en ce que** les moyens de solidarisation (23) comportent, sur l'une des pièces (22A, 22B), une tête (24), dont le contour transversal est globalement allongé, et qui présente, annulairement, entre deux joues (26) parallèles, une rainure (28).

3. Accessoire de fixation suivant la revendication 2, **caractérisé en ce que** les moyens de solidarisation (23) comportent, sur l'autre des pièces (22A, 22B), un évidement (29), dont le contour transversal, lui aussi allongé, est apte au passage de la tête (24) précédente, et qui, en croix avec sa direction d'allongement (D'), est bordé, latéralement, sur au moins deux côtés opposés, par une banquette (30) dont l'épaisseur (E1) est au plus égale à largeur (L) de la rainure (28) de cette tête (24).

4. Accessoire de fixation suivant la revendication 3, **caractérisé en ce que** l'évidement (29) a, suivant sa direction d'allongement (D'), une dimension longitudinale (D'1) supérieure à la dimension longitudinale (D1) correspondante de la tête (24), et la banquette (30) le contourne en continu sur trois côtés.

5. Accessoire de fixation suivant la revendication 4, **caractérisé en ce que** la banquette (30) a, en plan, un contour extérieur, qui, sur une partie au moins de sa longueur, est complémentaire de celui de la tête (24).

6. Accessoire de fixation suivant la revendication 5, **caractérisé en ce que** le contour extérieur de la banquette (30) est complémentaire de celui de la tête (24) sur deux côtés adjacents de l'évidement (29), et, sur le troisième côté, la banquette (30) s'étend au-delà de ce contour.

7. Accessoire de fixation suivant l'une quelconque des revendications 3 à 6, **caractérisé en ce que** l'évidement (29) a, en plan, un contour qui, à l'une de ses extrémités (49), est hémicirculaire, et qui, à l'autre de ses extrémités (50), est quadrangulaire, et la tête (24) a, elle-même, en plan, un contour qui est hémicirculaire à chacune de ses propres extrémités.

8. Accessoire de fixation suivant l'une quelconque des revendications 3 à 7, **caractérisé en ce que** l'évidement (29) intervient sur une platine (31) qui appartient à la pièce (22A) considérée, et dont l'épaisseur (E2) est supérieure à la largeur (L) de la rainure (28) de la tête (24) de l'autre pièce (22B), et la banquette (30) est en retrait par rapport à l'une au moins des faces de cette platine (31).

9. Accessoire de fixation suivant la revendication 8, **caractérisé en ce que** la banquette (30) est en retrait par rapport à la face concernée de la platine (31) d'une profondeur (P) sensiblement égale à l'épaisseur (E3) de la joue (26) terminale de la tête (24).

10. Accessoire de fixation suivant l'une quelconque des revendications 8, 9, **caractérisé en ce que** la banquette (30) est à niveau avec l'autre face de la platine (31).

11. Accessoire de fixation suivant l'une quelconque des revendications 2 à 10, **caractérisé en ce que** la tête (24) appartient à la pièce (22B) inférieure, et l'évidement (29) à la pièce (22A) supérieure.

12. Accessoire de fixation suivant la revendication 11, **caractérisé en ce que** la pièce (22B) inférieure comporte une traverse (37), avec, en saillie sur la face supérieure de cette traverse (37), dans la partie médiane (38) de celle-ci, un tronc (39), qui porte la tête (24), et, en saillie sur sa face inférieure, des moyens d'encliquetage, (40), par lesquels elle est adaptée à pouvoir être rapportée sur le socle (11) de la goulotte (12).

13. Accessoire de fixation suivant la revendication 12, **caractérisé en ce que** la partie médiane (38) de la traverse (37) est en surélévation par rapport à ses extrémités (43).

14. Accessoire de fixation suivant la revendication 12, **caractérisé en ce que** la traverse (37) est rectiligne ou quasi rectiligne.

15. Accessoire de fxation suivant l'une quelconque des revendications 1 à 14, **caractérisé en ce que** la pièce (22A) supérieure comporte, en saillie sur sa face supérieure, des moyens d'encliquetage (32) par lesquels elle est adaptée à pouvoir être rapportée sur le mécanisme d'appareillage (10).

16. Accessoire de fixation suivant la revendication 15, **caractérisé en ce que** la pièce (22A) supérieure comporte, également, en saillie sur sa face supérieure, des moyens d'emboîtement (34) par lesquels elle est adaptée à pouvoir être engagée sur le mécanisme d'appareillage (10).

17. Accessoire de fixation suivant l'une quelconque des revendications 1 à 16, **caractérisé en ce que**, entre les deux pièces (22A, 22B), interviennent des moyens d'arc-boutement (55).

18. Accessoire de fixation suivant la revendication 17, **caractérisé en ce que** les moyens d'arc-boutement (55) comportent deux vis (56), qui interviennent à distance l'une de l'autre, et dont chacune est en prise par son fût (57) avec l'une pièces (22A, 22B) et porte sur l'autre de celles-ci par l'extrémité de ce fût (57).

19. Accessoire de fixation suivant la revendication 18, **caractérisé en ce que**, pour chacune des vis (56), la pièce (22A, 22B) sur laquelle une telle vis (56) porte par l'extrémité de son fût (57) comporte des moyens de centrage (60).

## Claims

1. A fixing accessory for an electrical equipment mechanism for securing to the base (11) of ducting (12) of the type formed by two distinct parts (22A, 22B), namely an upper part (22A) which is adapted to be capable of being interlocked with an electrical equipment mechanism (10), and a lower part (22B) which is adapted to be capable of being interlocked with the base (11) of ducting (12) with, interposed between said two parts (22A, 22B), interlocking means (23) of the quarter turn attachment type, **characterized in that** the lower part (22B) is selected from a set of different lower parts (22B) which are adapted to different configurations of the ducting bases.

2. A fixing accessory according to claim 1, **characterized in that** the interlocking means (23) comprise, on one of the parts (22A, 22B), a head (24) the transverse contour of which is generally elongate and which has an annular groove (28) between two parallel cheeks (26).

3. A fixing accessory according to claim 2, **characterized in that** the interlocking means (23) comprise, on the other part (22A, 22B), a recess (29) the transverse contour of which is also elongate and is suitable for the passage of said head (24) and which, transverse to its elongate direction (D'), is laterally bordered on at least two opposed sides by a ledge (30) the thickness (E1) of which is at least equal to the width (L) of the groove (28) of said head (24).

4. A fixing accessory according to claim 3, **characterized in that** the recess (29) has, along its elongate direction (D'), a longitudinal dimension (D'1) that is greater than the corresponding longitudinal direction (D1) of the head (24), and the ledge (30) surrounds it continuously on three sides.

5. A fixing accessory according to claim 4, **characterized in that** the ledge (30) has, in plan view, an outer contour which is complementary to that of the head (24) over at least a portion of its length.

6. A fixing accessory according to claim 5, **characterized in that** the outer contour of the ledge (30) is complementary to that of the head (24) on two adjacent sides of the recess (29) and the ledge (30) extends beyond said contour on the third side.

7. A fixing accessory according to any one of claims 3 to 6, **characterized in that** in plan view, the recess (29) has a contour which is semicircular at one of its ends (49) and which is quadrangular at the other of its ends (50), and the head (24) has, in plan view, a contour which is semicircular at each of its ends.

8. A fixing accessory according to any one of claims 3 to 7, **characterized in that** the recess (29) is provided on a plate (31) which forms part of the part (22A) under consideration, having a thickness (E2) which is greater than the width (L) of the groove (28) of the head (24) of the other part (22B), and the ledge (30) is countersunk with respect to at least one of the faces of said plate (31).

9. A fixing accessory according to claim 8, **characterized in that** the ledge (30) is countersunk with respect to the face of the plate (31) under consideration by a depth (P) which is substantially equal to the thickness (E3) of the end cheek (26) of the head (24).

10. A fixing accessory according to claim 8 or claim 9, **characterized in that** the ledge (30) is level with the other face of the platen (31).

11. A fixing accessory according to any one of claims 2 to 10, **characterized in that** the head (24) forms part of the lower part (22B) and the recess (29) forms part of the upper part (22A).

12. A fixing accessory according to claim 11, **characterized in that** the lower part (22B) comprises a crossbar (37) with, projecting above the upper face of said transverse (37), in the median part (38) thereof, a shank (39) which carries the head (24) and, projecting below its lower face, snap fit means (40) via which it is adapted for attachment to the base (11) of the ducting (12).

13. A fixing accessory according to claim 12, **characterized in that** the median portion (38) of the crossbar (37) is higher than its ends (43).

14. A fixing accessory according to claim 12, **characterized in that** the transverse (37) is rectilinear or almost rectilinear.

15. A fixing accessory according to any one of claims 1 to 14, **characterized in that** the upper part (22A) comprises, projecting above its upper face, snap fit means (32) via which it is adapted to be attached to the electrical equipment mechanism (10).

16. A fixing accessory according to claim 15, **characterized in that** the upper part (22A) also comprises, projecting over its upper face, fitting means (34) via which it is suitable for engagement with the electrical equipment mechanism (10).

17. A fixing accessory according to any one of claims 1 to 16, **characterized in that** buttress means (55) are interposed between the two parts (22A, 22B).

18. A fixing accessory according to claim 17, **characterized in that** the buttress means (55) comprise two screws (56) which are positioned at a distance from each other, each of which is engaged via its shaft (57) with a part (22A, 22B) and bears on the other via the end of said shaft (57).

19. A fixing accessory according to claim 18, **characterized in that** for each screw (56), the part (22A, 22B) on which said screw (56) bears via the end of its shaft (57) comprises centering means (60).

## Patentansprüche

1. Befestigungszubehörteil für ein an dem Sockel (11) eines Kabelkanals (12) zu befestigendes Gerät, das aus zwei verschiedenen Teilen (22A, 22B) gebildet ist, nämlich einem oberen Teil (22A), welches geeignet ist, mit einem Gerät (10) verbunden zu werden, und einem unteren Teil (22B), welches geeignet ist, mit dem Sockel (11) eines Kabelkanals (12) verbunden zu werden, wobei zwischen den beiden Teilen (22A, 22B) mit einer Vierteldrehung montierbare Verbindungsmittel (23) vorgesehen sind,
**dadurch gekennzeichnet,**
**dass** das untere Teil (22B) aus einem Satz von unterschiedlichen unteren Teilen (22B) ausgewählt ist, die an unterschiedliche Kabelkanalsockelanordnungen angepasst sind.

2. Befestigungszubehörteil nach Anspruch 1,
**dadurch gekennzeichnet,**
**dass** die Verbindungsmittel (23) auf einem der Teile (22A, 22B) einen Kopf (24) umfassen, dessen Kontur in Querrichtung im Wesentlichen lang gestreckt ist und der ringförmig zwischen zwei parallelen Wangen (26) eine Rille (28) aufweist.

3. Befestigungszubehörteil nach Anspruch 2,
**dadurch gekennzeichnet,**
**dass** die Verbindungsmittel (23) auf dem anderen der Teile (22A, 22B) eine Aussparung (29) aufweisen, deren Kontur in Querrichtung ebenfalls langgestreckt ist und geeignet ist, den vorgenannten Kopf (24) durchzulassen, und die kreuzförmig in Bezug auf die Richtung ihrer Langstreckung (D') seitlich auf wenigstens zwei gegenüberliegenden Seiten von einem Steg (30) begrenzt ist, dessen Dicke (E1) höchstens gleich der Breite (L) der Rille (28) dieses Kopfes (24) ist.

4. Befestigungszubehörteil nach Anspruch 3,
**dadurch gekennzeichnet,**
**dass** die Ausnehmung (29) in Richtung ihrer Langstreckung (D') eine Längserstreckung (D'1) besitzt, die größer ist als die entsprechende Längserstreckung (D1) des Kopfes (24), und dass der Steg (30) sie ohne Unterbrechung an drei Seiten umgibt.

5. Befestigungszubehörteil nach Anspruch 4,
**dadurch gekennzeichnet,**
**dass** der Steg (30) von oben gesehen eine Außenkontur besitzt, die wenigstens auf einen Teil ihrer Länge komplementär ist zu der des Kopfes (24).

6. Befestigungszubehörteil nach Anspruch 5,
**dadurch gekennzeichnet ,**
**dass** die Außenkontur des Steges (30) auf zwei an die Ausnehmung (29) angrenzenden Seiten komplementär zu der des Kopfes (24) ist, und der Steg (30) sich auf der dritten Seite über diese Kontur hinaus erstreckt.

7. Befestigungszubehörteil nach einem der Ansprüche 3 bis 6,
**dadurch gekennzeichnet,**
**dass** die Ausnehmung (29) von oben gesehen eine Kontur besitzt, die an einem ihrer Enden (49) halbkreisförmig ist und an dem anderen ihrer Enden (50) viereckig ist, und dass der Kopf (24) selbst von oben gesehen eine Kontur besitzt, die an jeder ihrer eigenen Enden halbkreisförmig ist.

8. Befestigungszubehörteil nach einem der Ansprüche 3 bis 7,
**dadurch gekennzeichnet,**
**dass** die Ausnehmung (29) auf einer Platte (31) vorgesehen ist, die zu dem betreffenden Teil (22A) gehört, und deren Dicke (E2) größer als die Breite (L) der Rille (28) des Kopfes (24) des anderen Teiles (22B) ist, und dass der Steg (30) in Bezug auf wenigstens eine der Seiten dieser Platte (31) nach hinten versetzt ist.

9. Befestigungszubehörteil nach Anspruch 8,
**dadurch gekennzeichnet,**
**dass** der Steg (30) in Bezug auf die betreffende Seite der Platte (31) um eine Tiefe (P) nach hinten versetzt ist, welche im Wesentlichen gleich der Dicke (E3) der Abschlusswange (26) des Kopfes (24) ist.

10. Befestigungszubehörteil nach einem der Ansprüche 8 oder 9,
**dadurch gekennzeichnet,**
**dass** der Steg (30) auf einer Höhe mit der anderen Seite der Platte (31) ist.

11. Befestigungszubehörteil nach einem der Ansprüche 2 bis 10,
**dadurch gekennzeichnet,**
**dass** der Kopf (24) zu dem unteren Teil (22B) gehört, und dass die Ausnehmung (29) zu dem oberen Teil (22A) gehört.

12. Befestigungszubehörteil nach Anspruch 11,
**dadurch gekennzeichnet,**
**dass** das untere Teil (22B) ein Querstück (37) umfasst, wobei in dessen mittlerem Bereich (38), vorstehend über die obere Seite dieses Querstückes (37), ein Rumpf (39) vorgesehen ist, der den Kopf (24) trägt, und auf seiner unteren Seite vorspringend Rastmittel (40) vorgesehen sind, über welche es in der Lage ist, an dem Sockel (11) des Kabelkanals (12) befestigt zu werden.

13. Befestigungszubehörteil nach Anspruch 12,
**dadurch gekennzeichnet,**
**dass** der mittlere Bereich (38) des Querstückes (37) in Bezug auf dessen Enden (43) erhöht ist.

14. Befestigungszubehörteil nach Anspruch 12,
**dadurch gekennzeichnet,**
**dass** das Querstück (37) geradlinig oder fast geradlinig ist.

15. Befestigungszubehörteil nach einem der Ansprüche 1 bis 14,
**dadurch gekennzeichnet,**
**dass** das obere Teil (22A) vorspringend auf seiner oberen Seite Rastmittel (32) umfasst, durch welche es geeignet ist, auf dem Gerät (10) angebracht zu werden.

16. Befestigungszubehörteil nach Anspruch 15,
**dadurch gekennzeichnet,**
**dass** das obere Teil (22A) ebenfalls auf seiner Oberseite vorspringend Einsteckmittel (34) umfasst, durch welche es geeignet ist, auf dem Gerät (10) aufgesteckt zu werden.

17. Befestigungszubehörteil nach einem der Ansprüche 1 bis 16,
**dadurch gekennzeichnet,**
**dass** zwischen den beiden Teilen (22A, 22B) Verstrebungsmittel (55) vorgesehen sind.

18. Befestigungszubehörteil nach Anspruch 17,
**dadurch gekennzeichnet,**
**dass** die Verstrebungsmittel (55) zwei Schrauben (56) umfassen, die voneinander beabstandet liegen, und von denen jede über ihren Schaft (57) mit einem der Teile (22A, 22B) in Eingriff ist und sich auf dem jeweils anderen über das Ende dieses Schaftes (57) abstützt.

19. Befestigungszubehörteil nach Anspruch 18,
**dadurch gekennzeichnet,**
**dass** das Teil (22A, 22B), auf welchem sich eine solche Schraube (56) über das Ende ihres Schaftes (57) abstützt, für jede der Schrauben (56) Zentriermittel (60) umfasst.
